Europäisches Patentamt

European Patent Office

Office européen des brevets

Publication number: **0 295 778**
**A2**

# EUROPEAN PATENT APPLICATION

Application number: **88304218.6**

Int. Cl.⁴: **B01D 5/00**

Date of filing: **10.05.88**

Priority: **15.05.87 JP 71592/87 U**

Date of publication of application:
**21.12.88 Bulletin 88/51**

Designated Contracting States:
**ES GB IT**

Applicant: **MITSUBISHI DENKI KABUSHIKI KAISHA**
**2-3, Marunouchi 2-chome Chiyoda-ku**
**Tokyo 100(JP)**

Inventor: **Kameda, Takashi Ryoden Eng. K.K.**
**Itami**
**Jiyogosho No. 1-1, Tsukaguchihonmachi**
**8-chome**
**Amagasaki Hyogo(JP)**
Inventor: **Kawamura, Tadafumi Ryoden Eng.**
**K.K. Itami**
**Jiyogosho No. 1-1, Tsukaguchihonmachi**
**8-chome**
**Amagasaki Hyogo(JP)**

Representative: **Jackson, Peter Arthur et al**
**GILL JENNINGS & EVERY 53-64 Chancery**
**Lane**
**London WC2A 1HN(GB)**

Condenser for ebullient cooling device.

A condenser includes a header (85) and an associated header cover (13) at each end of an array of finned cooling tube (7), at least one of the header and cover being formed with a protrusion (14) projecting towards and welded to the other of the header and cover.

# FIG. 1

## CONDENSER FOR EBULLIENT COOLING DEVICE

The present invention relates to a condenser for an ebullient cooling device for condensing a condensable coolant, such as fluon, to cool a hot member.

Figures 7 to 9 shows a conventional condenser of such kind, which is disclosed in Japanese Patent Publication No. 41147 1977. These Figures show an evaporator 1, a hot member 2 disposed in the evaporator 1, a condensable coolant 3, such as fluon, for cooling the hot member 2. Since the cooling capability of the cooling device is degraded if non-condensable gas such as air is mixed in the coolant, the device is made air-tight so that it is filled with the coolant in gas and liquid phases.

A condenser 4 is provided above the evaporator 1 and is tilted slightly with respect thereto for condensing evaporated coolant 3. Evaporation pipes 5 connect an upper portion of the evaporator 1 and a side portion of the condenser 4 and return pipes 6 connect a lower portion of the condenser 4 and a side portion of the evaporator 1.

The condenser 4 comprises an array of finned cooling tubes 7 having a plurality of cooling fins and arranged in parallel, a header 8 mounted at each end of the cooling tubes 7 for connecting a plurality of the cooling tubes 7 together, a header cover 9 mounted on each header 8, a spacer 10 in the shape of circular pillar penetrating a centre of the header cover 9 as a reinforcing member against a pressure increase due to evaporation of the coolant 3, a first weld 11 between the header 8 and one end of the spacer 10 and a second weld 12 between the header cover 9 and the other end of the spacer 10.

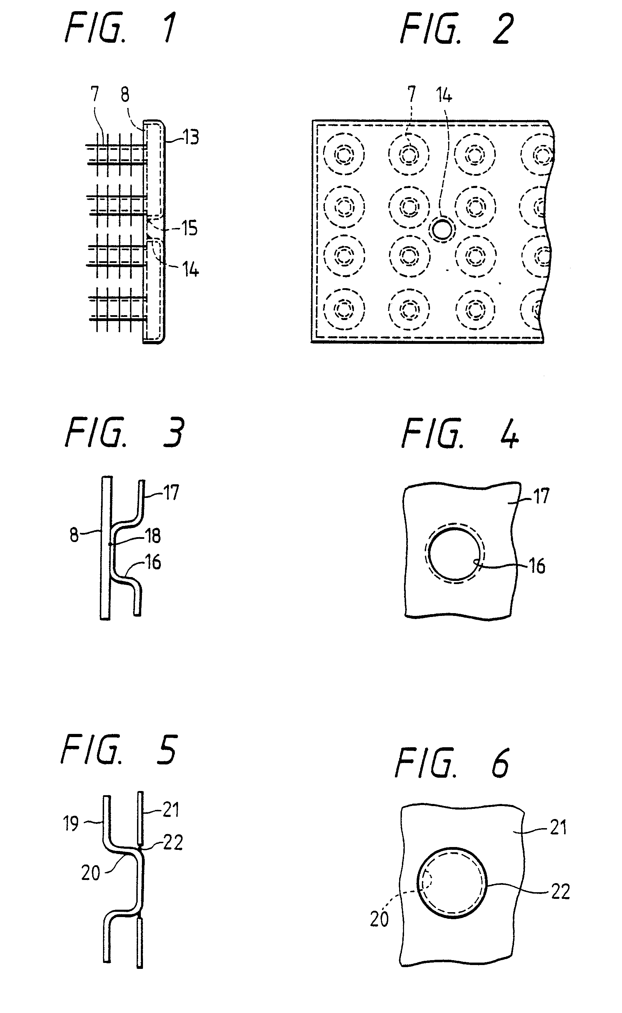

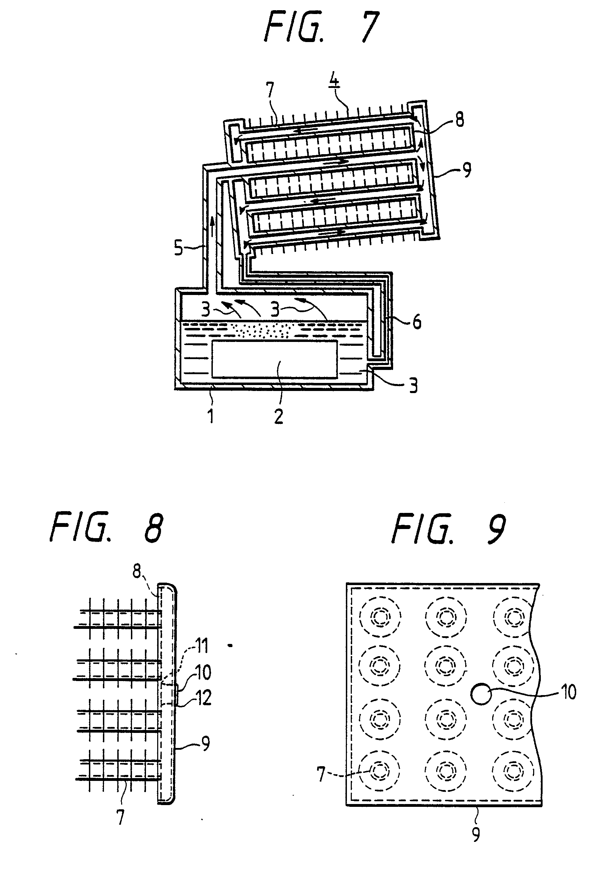

In operation, the coolant 3 in liquid phase in the evaporator 1 cools the hot member 2, is heated thereby to its boiling point and evaporated. The coolant 3 in gas phase passes from the upper portion of the evaporator 1 through the evaporator pipe 5 to the inclined condenser 4. In the condenser 4, the gas phase coolant 3 flows through the cooling tubes 7 in the direction shown by the arrows in Figure 7 and liquefied. The coolant 3 in liquid phase flows down by gravity to an inlet of the return pipe 6 through which it is returned to the evaporator 1. The member 2 is cooled by continuation of this operation.

In the conventional condenser constructed as mentioned above, it is necessary to form a central hole in the header cover and arrange the spacer 10 so that it passes through the central hole of the header cover 9. Further, in order to maintain the air-tightness thereof, the first and the second welds 11 and 12 are unavoidable at the junctions between the header 8 and the spacer 10 and between the header cover 9 and the spacer 10.

When a plurality of such spacers 10 are required, they must be inserted into the corresponding number of holes formed in the header cover, after the header cover has been welded to the header. Therefore, the welding of the spacers to the header and the header cover is very difficult.

An object of the present invention is to provide a condenser for an ebullient cooling device in which there is no need of separate reinforcing spacers and the number of welds can be reduced.

According to the present invention, a condenser for an ebullient cooling device, the condenser comprising a plurality of cooling tubes for cooling a condensable coolant flowing therethrough, each of the cooling tubes having a plurality of radiation fins; header members provided at respective ends of the cooling tubes for supporting and connecting the cooling tubes at the respective ends thereof; header cover members provided for the respective header members, the header cover members being mounted on the respective header members to form passages for the coolant between the ends of the cooling tubes; and a reinforcement between each header member and respective header cover member; is characterised in that the reinforcement is provided by at least one protrusion integrally formed with at least one of, and protruding towards and being welded to the other of, each header member and respective header cover member.

The protrusion thus serves as a reinforcing member, resulting in the avoidance of a separate reinforcing spacer. Since it is enough to weld only the contact portion of the header or the header cover, the manufacturing cost of the condenser can be minimized while improving the air-tightness thereof.

In the accompanying drawings:-

Figure 1 is a cross sectional view of a main portion of a condenser for an ebullient cooling device according to the present invention;

Figure 2 is a front view of the main portion in Figure 1;

Figure 3 is a cross sectional view of a main portion of another construction in accordance with the present invention;

Figure 4 is a front view of the main portion of the device shown in Figure 3;

Figure 5 is a cross sectional view of a main portion of a further construction in accordance with the present invention;

Figure 6 is a front view of the main portion shown in Figure 5;

Figure 7 shows a conventional condenser for an ebullient cooling device;

Figure 8 is a cross section of a main portion of the condenser shown in Figure 7; and,

Figure 9 is a front view of the main portion shown in Figure 8.

In Figures 1 and 2, which show an embodiment of the present invention in which the same reference numerals as those used in Figures 7 to 9 depict the same or corresponding portions, a header cover 13 is mounted on a header 8 and a circular protrusion 14 is formed in a central portion of the header cover 13 and protrudes towards the header 8. A top portion of the protrusion 14 is open and a periphery of the opening is welded directly to the header 8 at a weld portion 15. The protrusion 14 may be formed by punching and drawing the header cover 13.

The protrusion 14 serves as a reinforcing member against a pressure increase in a condenser 4 due to evaporation of coolant 3 and, since it takes the form of a cylinder as shown, a welding operation to be performed to an inner periphery of the opening thereof is much facilitated.

Figures 3 and 4 show another form of the protrusion. In these Figures, the protrusion takes the form of a pan 16 formed by drawing a header cover 17. In this case, the protrusion 16 may be welded to the header 8 by spot-welding or plug-welding.

Figures 5 and 6 show another form embodiment of the protrusion in which a header 19 is drawn to form a pan-shaped protrusion 20 which is welded to a corresponding hole of a header cover 21 at a weld portion 22.

It is possible to form protrusions in both the header and header cover so that top surfaces of the protrusions are in mutual contact and to weld them together by, for example, spot-welding or plug-welding.

## Claims

1. A condenser for an ebullient cooling device, the condenser comprising a plurality of cooling tubes (7) for cooling a condensable coolant flowing therethrough, each of the cooling tubes having a plurality of radiation fins; header members (8,19) provided at respective ends of the cooling tubes for supporting and connecting the cooling tubes at the respective ends thereof; header cover members (9,13,17,21) provided for the respective header members, the header cover members being mounted on the respective header members to form passages for the coolant between the ends of the cooling tubes; and a reinforcement (14,16,20) between each header member and respective header cover member; characterised in that the reinforcement is provided by at least one protrusion (14,16,20) integrally formed with at least one of, and protruding towards and being welded to the other of, each header member and respective header cover member.

2. A condenser according to claim 1, wherein the protrusion takes the form of a circular cylinder (14) formed by punching and drawing one of the members, an inner periphery of an open end of the cylinder being welded to the other member.

3. A condenser according to claim 1, wherein the protrusion takes the form of pan (16,20) formed by drawing one of the members, a bottom of the pan being welded to the other member.

4. A condenser according claim 3, wherein the protrusion (20) is formed in the header member (19) and a corresponding hole is formed in the header cover member (21), an outer periphery of the pan being welded to a periphery of the hole in the header cover member.

5. A condenser according to claim 1, wherein mutually opposing protrusions are formed in both the members (8,9), and bottoms of the protrusions are welded together by spot-welding or plug-welding.

FIG. 1

FIG. 2

FIG. 3

FIG. 4

FIG. 5

FIG. 6

## FIG. 7

## FIG. 8

## FIG. 9